(19) Europäisches Patentamt
European Patent Office
Office européen des brevets

(11) **EP 4 254 770 A1**

(12) **EUROPEAN PATENT APPLICATION**

(43) Date of publication:
**04.10.2023 Bulletin 2023/40**

(51) International Patent Classification (IPC):
**H02M 7/5387** (2007.01)

(21) Application number: **22164840.5**

(22) Date of filing: **28.03.2022**

(52) Cooperative Patent Classification (CPC):
**H02M 7/53871; H02M 7/53876;** H02M 1/081

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ABB SCHWEIZ AG**
**5400 Baden (CH)**

(72) Inventors:
• **HARNEFORS, Lennart**
**72591 Västerås (SE)**
• **ROUTIMO, Mikko**
**02650 Espoo (FI)**

(74) Representative: **Kransell & Wennborg KB**
**P.O. Box 27834**
**115 93 Stockholm (SE)**

(54) **CONTROL OF A VOLTAGE SOURCE CONVERTER**

(57)    The invention is concerned with a method, computer program and computer program product for determining a synchronizing angle for a processing plane comprising a first axis and a second axis, a controller for controlling a voltage source converter and a converting arrangement comprising a voltage source converter and a controller. The controller (10, 52') processes an ac voltage error ($E_d$ - $E_{ref}$), which ac voltage error ($E_d$ - $E_{ref}$) is the error of a voltage component ($E_d$) along the first axis of an ac voltage (E) at an ac side of the voltage source converter (64), and determines a synchronization angle ($\theta$) for the processing plane based on the processed ac voltage error $(i_a^{\mathrm{ref}})$ .

Fig. 5

EP 4 254 770 A1

**Description**

**TECHNICAL FIELD**

The present disclosure generally relates to the control of a voltage source converter and in particular to a method, computer program and computer program product for determining a synchronizing angle for a processing plane comprising a first axis and a second axis, a controller for controlling a voltage source converter as well as to a converting arrangement comprising a voltage source converter and such a controller.

**BACKGROUND**

Vector current control (VCC) and power-synchronization control (PSC) are two different methods for controlling a grid-connected voltage-source converter. VCC is inherited from vector control of ac motor drives, whereas PSC mimics the dynamics of a synchronous machine. They are respectively considered to be grid-following and grid-forming schemes, suited respectively for connection to strong and weak grids.

Over the last few years, the two schemes have been robustified so that they now both work well regardless of the grid strength. Interestingly, the modifications and additions that constitute the robustification have the effect that VCC and PSC converge to the same scheme. This has been discussed by L. Harnefors et al. in the paper "A Universal Controller for Grid-Connected Voltage-Source Converters", IEEE JOURNAL OF EMERGING AND SELECTED TOPICS IN POWER ELECTRONICS, VOL. 9, NO.5, OCTOBER 2021.

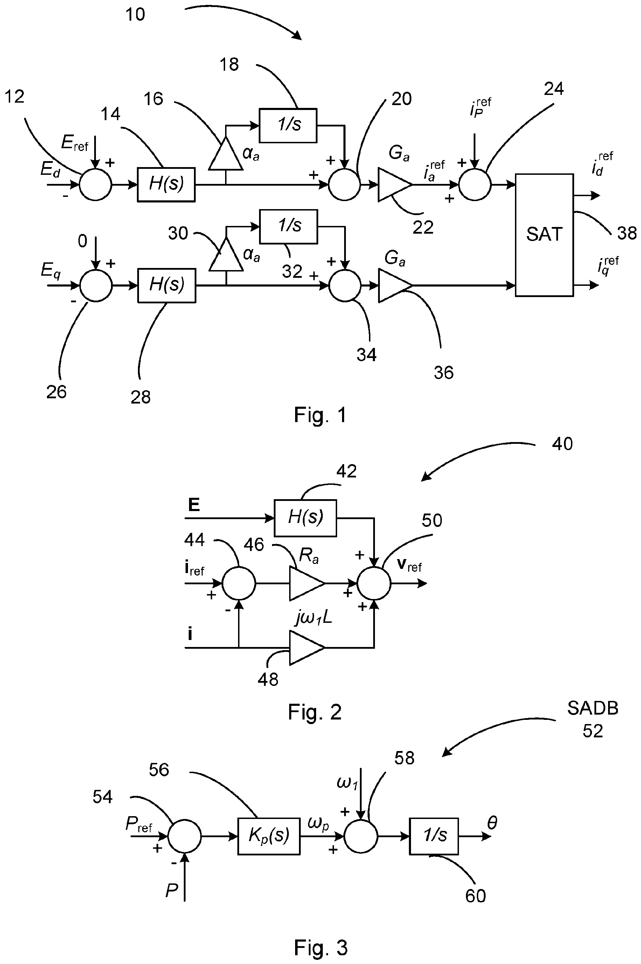

To summarize the findings in this paper, when recast as a VCC-like structure, PSC comprises three control blocks, as shown in fig. 1, 2 and 3.

As can be seen in fig. 1, there is an ac voltage control block 10 and this ac voltage control block 10 operates in a processing plane having a first and a second axis. In the paper the processing plane is the dq-plane where the d-axis is the first axis and the q-axis is the second axis. For this reason, the ac voltage control block 10 comprises a d-axis control branch comprising a first subtracting element 12 in which an ac voltage error that is the difference between a voltage reference $E_{ref}$ and an ac voltage $E_d$ on an ac side of the voltage source converter is calculated, which error is thus an error for a voltage $E_d$ along a d-axis of the dq-plane. The voltage error $E_{ref} - E_d$ is supplied to a first low pass filter 14 that filters the ac voltage error using a transfer function $H(s)$. The low pass filtered voltage error is then supplied to a first input of a first adding element 20. The low pass filtered voltage error is also supplied to a first amplifying element 16 that amplifies the ac voltage error with a gain of $\alpha_a$. The amplified and filtered ac voltage error is then supplied to a first integrating element 18 that performs integration and supplies the result to a second input of the first adding element 20. The sum of the low pass filtered ac voltage error and the amplified and integrated low pass filtered ac voltage error is then supplied to a second amplifying element 22, which multiplies the sum with a gain $Ga$ for obtaining a processed ac voltage error $i_a^{ref}$, which is also an ac-voltage-controlling current reference. The processed ac voltage error $i_a^{ref}$ is then supplied to a second adding element 24 to be added to an active-power-producing current reference $i_P^{ref}$. The sum of the processed ac voltage error $i_a^{ref}$ and the active-power-producing current reference $i_P^{ref}$ is then supplied to a saturating element 38.

The ac voltage control block 10 also comprises a q-axis control branch in which a second subtracting element 26 subtracts an ac voltage $E_q$ along the q-axis from zero and thereby provides a negative q-axis ac voltage $-E_q$ as an output. The negative q-axis ac voltage $-E_q$ is then supplied to a second low pass filter 28 that filters the negative q-axis ac voltage $-E_q$ using the transfer function $H(s)$. The low pass filtered negative q-axis ac voltage is then supplied to a first input of a third adding element 34. The low pass filtered negative q-axis ac voltage is also supplied to a third amplifying element 30 that amplifies it with the gain of $\alpha_a$. The amplified and filtered negative q-axis ac voltage is then supplied to a second integrating element 32 that performs integration and supplies the result to a second input of the third adding element 34. The sum of the low pass filtered negative q-axis ac voltage and the amplified and integrated low pass filtered negative q-axis ac voltage is then supplied to a fourth amplifying element 36, which multiplies the sum with the gain $G_a$. The multiplied sum is then supplied to the saturating element 38.

The sum of the processed ac voltage error $i_a^{ref}$ and the active-power-producing current reference $i_P^{ref}$ reference forms a d-axis component of a current reference and the multiplied sum of the low pass filtered negative q-axis ac voltage and the amplified and integrated low pass filtered negative q-axis ac voltage forms a q-axis component of the current reference. The saturating element 38 saturates the current reference through limiting the magnitude of it to a maximum allowed value while retaining the angle between the d-axis component and the q-axis component. A saturated current reference is then output as the d-axis current reference $i_d^{\mathrm{ref}}$ and q-axis current reference $i_q^{\mathrm{ref}}$ to be used by a current control block.

The current control block 40 is shown in fig. 2 and comprises a first, a second and a third parallel branch. In the first branch, the ac voltage **E** at the ac side of the voltage source converter is low pass filtered in a third low pass filter 42 using the transfer function H(s), and the low pass filtered voltage is supplied to a first input terminal of a fourth adding element 50. The second branch comprises a third subtracting element 44 in which a current error that is the difference between a current reference $\mathbf{i}_{\mathrm{ref}}$ and an ac current i at the ac side of the voltage source converter is formed. The ac current error $\mathbf{i}_{\mathrm{ref}}$ - i is supplied to a fifth amplifying element 46 that amplifies the ac current error with a gain of $R_a$. The amplified ac current error is then supplied to a second input of the fourth adding element 50. In the third branch the ac current i is amplified with a gain of $j\omega_1 L$ by a sixth amplifying element 48 and the amplified ac current is supplied to a third input terminal of the fourth adding element 50. The fourth adding element 50 then provides the sum of the inputs as a reference voltage $\mathbf{v}_{\mathrm{ref}}$ to be used for controlling the voltage source converter.

As can be seen in fig. 3, there is a synchronization control block that is made up of a synchronization angle determining branch SADB 52. The branch comprises a fourth subtracting element 54 that forms an active power control error between the power $P$ at the ac side of the voltage source converter and a power reference $P_{\mathrm{ref}}$. The active power control error $P_{\mathrm{ref}}$ - $P$ is supplied to a processing element 56 in which the active power control error is low pass filtered and amplified with a gain $K_p$ in order to obtain an angular frequency $\omega_p$, which is supplied to a fifth adding element 58 in which it is added to a nominal angular grid frequency $\omega_1$ and the sum is integrated in a third integrating element 60 and provided as a synchronization angle $\theta$ for the dq-plane.

In the control blocks discussed above, $\mathbf{E} = E_d + jE_q$ and $\mathbf{i} = i_d + ji_q$ are respectively the dq-plane space vectors for a dc side voltage, which may be the voltage at a point-of-common-coupling (PCC) and the converter output current i at the same point, $\mathbf{v}_{\mathrm{ref}}$ is the reference for the converter voltage, L is an inductance between the voltage source converter and the PCC, $\omega_1$ is a nominal angular frequency, and $\theta$ is the dq-plane angle or synchronization angle used in conversions to and from the dq-plane.

The ac voltage control block 10 supplies the reference $\mathbf{i}_{\mathrm{ref}} = i_d^{\mathrm{ref}} + j i_q^{\mathrm{ref}}$ to the current control block 40. It is saturated (SAT) to the maximum permissible modulus, when needed to prevent overcurrent. (However, SAT is normally transparent, i.e., not effectuated.) The ac voltage control block 10 comprises PI controllers, formed by the amplifying and integrating elements 16, 18, 22 30, 32 and 36, in the d-axis control branch and q-axis control branch that form d-to-d and q-to-q signal paths, cascaded with the low-pass filters 14 and 28, giving the transfer function:

$$G_a \frac{s+\alpha_a}{s} H(s) \qquad (1)$$

For PSC correspondence, the P gain is selected as $G_a = 1/R_a$, where $R_a$ is the proportional or P gain of the current control block 40, and integrating or I gain as $\alpha_a = 0.1$-$0.2$ p.u., where p.u. stands for per unit. The power control that results from PSC is different to a conventional power controller, which couples from d to q. In the d-axis control branch, the active-power-producing current component reference

$$i_P^{\mathrm{ref}} = \frac{P_{\mathrm{ref}}}{\kappa E_{\mathrm{ref}}} \qquad (2)$$

is added, where $P_{\mathrm{ref}}$ is the active-power reference, $E_{\mathrm{ref}}$ is the reference for $E$, $\kappa = 3/(2K^2)$, and $K$ is the space-vector scaling constant.

The current control block 40 has a proportional or P term, a dq decoupler, and a PCC-voltage feedforward through low-pass filter $H(s)$, which can, but does not have to, be identical to that in the ac voltage control block 10. An integrating or I part can be added if needed, as can resonant parts for negative-sequence and harmonics control. The following selections are recommended:

$$R_a = \alpha_c L \qquad\qquad H(s) = \frac{\alpha_c}{s+\alpha_c} \qquad (3)$$

where $\alpha_c$ is the desired closed-loop bandwidth.

The synchronization control block in fig. 3 is a power control block which emulates the swing equation of a synchronous machine, computing the dq-plane angle based on the active-power control error $P_{ref}$ - $P$. $K_p(s) = K_p$ (i.e., a P controller) yields response without a virtual inertia. Virtual inertia can be added by cascading a low-pass filter with the P gain. PI control eliminates the inherent frequency droop, which otherwise would give a static error $P_{ref}$ - $P$ when the angular grid frequency $\omega_g$ deviates from $\omega_1$.

The following gain selection recommendation is given in the paper:

$$K_p = \frac{\omega_1 R_a}{\kappa E_{\text{ref}}^2} \qquad (4)$$

In the paper, PSC as given in Figure 1, 2 and 3 is compared experimentally to a VCC scheme, designed with PSC as guideline. The current control block is identical, but a conventional voltage controller is used as a voltage control block. The synchronisation employs a phase-locked loop (PLL) instead of a power controller. The schemes perform similarly, but yet PSC as compared to VCC has a distinct benefit and drawback.

+ At transients, there are smaller deviations in $E_q$, owing to the usage of a power controller instead of a PLL for synchronization. This tends to give a step response in $P$ that is free of overshoot.

[0018] - For high current and high gain $R_a$, there is a tendency to ringing. This eventually turns into instability as $R_a$ is increased further. An upper limit on $R_a$ thus must be observed, which is not the case for VCC. The destabilizing effect is caused by the power controller.

Aspects of the present invention are concerned with providing a controller in which such ringing is handled.

## SUMMARY

Aspects of the present invention are thus concerned with the problem of handling ringing in a current provided by a voltage source converter.

This object is according to a first aspect achieved through a method of determining a synchronizing angle for a processing plane comprising a first axis and a second axis, the method being performed in a controller that controls a voltage source converter having an alternating current, ac, side and a direct current, dc, side, the method comprising:

   processing an ac voltage error, which ac voltage error is the error of a voltage component along the first axis of an ac voltage at the ac side of the voltage source converter to thereby obtain a processed ac voltage error, and

   determining the synchronization angle for the processing plane based on the processed ac voltage error.

The object is according to a second aspect achieved through a controller for controlling a voltage source converter having an alternating current, ac, side and a direct current, dc, side, the controller being configured to:

   process an ac voltage error, which ac voltage error is the error of a voltage component along a first axis of an ac voltage at the ac side of the voltage source converter, where the first axis is an axis of a processing plane also comprising a second axis, and

   determine a synchronization angle for the processing plane based on the processed ac voltage error.

The object is according to a third aspect achieved by a converting arrangement comprising a voltage source converter and a controller according to the third aspect.

The object is according to a fourth aspect achieved by a computer program for determining a synchronizing angle for a processing plane comprising a first axis and a second axis, which synchronization angle is used by a controller comprising a processor and configured to control a voltage source converter, the computer program being configured to implement the operation according to the first aspect when being operated on by the processor of the controller.

The object is according to a fifth aspect achieved by a computer program product for determining a synchronizing angle for a processing plane comprising a first axis and a second axis, the computer program product comprising a data carrier with the computer program according to the fourth aspect.

The processing plane may be a plane in which processing of electrical ac quantities is performed, such as the quantities current and voltage. The processing plane may be the dq-plane. The first axis may in this case be the d-axis and the second axis may be the q-axis.

The controller may be a power synchronization controller that is mapped onto a vector current control structure. The voltage at the ac side of the voltage source converter may additionally be the voltage at a point of common coupling.

According to a variation of the first aspect, the determining of the synchronization angle comprises applying proportional control on the processed ac voltage error for obtaining an angular velocity.

According to a corresponding variation of the second aspect, the controller, when being configured to determine the synchronization angle, is configured to apply proportional control on the processed ac voltage error for obtaining an angular velocity.

The application of proportional control may involve amplifying the processed ac voltage error with a gain.

The proportional control may also be combined with low pass filtering of the processed ac voltage error.

According to another variation of the first aspect, the determining of the synchronization angle comprises combining the obtained angular velocity with a nominal angular velocity.

According to a corresponding variation of the second aspect, the controller, when being configured to determine the synchronization angle, is configured to combine the obtained angular velocity with a nominal angular velocity.

The nominal angular velocity may be a nominal angular velocity at the ac side of the voltage source converter. The voltage source converter may be connected to an ac grid. In this case the nominal angular velocity may the nominal angular velocity of the ac grid.

The combining of the angular velocities may comprise forming a sum of the nominal angular velocity and the determined angular velocity.

According to yet another variation of the first aspect, the determining of the synchronization angle comprises integrating the combined angular velocities in order to obtain the synchronization angle.

According to a corresponding variation of the second aspect, the controller, when being configured to determine the synchronization angle, is configured to integrate the combined angular velocities in order to obtain the synchronization angle.

The method may furthermore be considered to be a method of controlling the voltage source converter.

In this case the method according to the first aspect may further comprise obtaining the voltage at the ac side of the voltage source converter, determining a reference voltage for the voltage source converter, where the ac side voltage is obtained in a control plane and the reference voltage is determined in the processing plane, transforming the ac side voltage from the control plane to the processing plane using the synchronization angle and transforming the reference voltage from the processing plane to the control plane using the synchronization angle.

The controller according to the second aspect may according to a corresponding variation be further configured to obtain the voltage at the ac side of the voltage source converter, determine a reference voltage for the voltage source converter, where the ac side voltage is obtained in a control plane and the reference voltage is determined in the processing plane, transform the ac side voltage from the control plane to the processing plane using the synchronization angle and transform the reference voltage from the processing plane to the control plane using the synchronization angle.

The control plane is a plane in which the electrical quantities are measured or obtained and in which the control is performed, such as the abc-plane.

According to yet another variation of the first aspect, the processing of the ac voltage error comprises applying proportional and integrating control on the ac voltage error.

According to a corresponding variation of the second aspect, the controller, when being configured to process the ac voltage error, is further configured to apply proportional and integrating control on the ac voltage error.

The processing of the ac voltage error may additionally comprise low-pass filtering the ac voltage error.

According to a further variation of the first aspect, the method further comprises determining a current reference based on the processed ac voltage error.

According to a corresponding variation of the second aspect, the controller is further configured to determine a current reference based on the processed ac voltage error.

According to yet another variation of the first aspect, the determining of the current reference comprises determining a component of the current reference along the first axis based on the processed ac voltage error.

According to a corresponding variation of the second aspect, the controller, when being configured to determine a current reference, is configured to determine a component of the current reference along the first axis based on the processed ac voltage error.

The determining of the component of the current reference along the first axis may in this case be made as a combination of the processed ac voltage error with an active-power-producing current reference, where the combination may be formed as a sum of the processed ac voltage error and the active-power producing current reference.

According to another variation of the first aspect, the determining of the current reference comprises determining a component of the current reference along the second axis based on a processed voltage component of the ac voltage along the second axis.

According to a corresponding variation of the second aspect, the controller, when being configured to determine a current reference is configured to determine a component of the current reference along the second axis based on a processed voltage component of the ac voltage along the second axis.

The component of the current reference along the second axis may be determined based on a processed voltage component of the ac voltage along the second axis, which processed voltage component may be obtained through applying proportional and integrating control on the voltage component of the ac voltage along the second axis. It is here possible that the ac voltage along the second axis is also low-pass filtered.

The determining of the current reference may additionally comprise saturating the current reference, e.g. the limiting of the magnitude of the current reference to a maximum allowed value, while retaining the phase angle.

The method according to the first aspect may additionally comprise processing the current reference for obtaining the control voltage used to control the voltage source converter.

In a similar manner the controller according to the second aspect may be additionally configured to process the current reference for obtaining the control voltage used to control the voltage source converter.

The processing of the current reference may comprise forming a current error between the current reference and an ac current on the ac side of the voltage source converter and processing the current error for obtaining the reference voltage.

The processing of the current reference may in this case comprise performing proportional control of the current error, e.g. amplifying the current error with a gain, and combining the processed current error with an amplified ac side current and the ac side voltage, possibly after the ac side voltage has been low pass filtered, where the result of the combination is the reference voltage for the voltage source converter. The combination may additionally be obtained as a sum of the processed current error, the amplified ac side current and the ac side voltage.

The applying of proportional control on the processed ac voltage error may involve amplifying the processed ac voltage error with a gain $K_E$, which gain $K_E$ may be a modification of a gain $K_P$ used to amplify a power error in a power control block, which power control block may emulate a swing equation of a synchronous machine.

The gain $K_E$ used in the proportional control of the processed ac voltage error may additionally be based on a voltage reference $E_{ref}$ used for forming the ac voltage error. The gain $K_E$ used in the proportional control of the processed ac voltage error may also be based on a gain $G_\alpha$ used when applying proportional and integrating control on the ac voltage error. The gain $K_E$ used in the proportional control of the processed ac voltage error may furthermore be based on a proportional gain $R_\alpha$ used in the proportional control of the current error. The gain $K_E$ used in the proportional control of the processed ac voltage error may also be based on a space vector scaling constant $_K$.

The gain $K_E$ used in the proportional control of the processed ac voltage error may additionally be set as

$$K_E = \frac{\kappa E_{ref} K_p}{R_a G_a}.$$

The controller may additionally be considered to comprise an ac voltage control block comprising a control branch for the first axis and a control branch for the second axis, and a synchronization angle determining branch for determining a synchronizing angle of a processing plane formed by the first axis and the second axis, where the synchronization angle control branch is connected to the control branch for the first axis.

In this case the voltage control block may also be seen as comprising a proportional and integrating control entity, where the input of the synchronization angle control branch is connected to the output of the proportional and integrating control entity.

Generally, all terms used in the claims are to be interpreted according to their ordinary meaning in the technical field, unless explicitly defined otherwise herein. All references to "a/an/the element, apparatus, component, means, etc." are to be interpreted openly as referring to at least one instance of the "element, apparatus, component, means, etc.", unless explicitly stated otherwise.

## BRIEF DESCRIPTION OF THE DRAWINGS

The specific embodiments of the inventive concept will now be described, by way of example, with reference to the accompanying drawings, in which:

Fig. 1 schematically shows the known ac voltage control block in a PSC controller implemented in a VCC structure,

Fig 2 schematically shows the known current control block in the PSC controller implemented in the VCC structure,

Fig. 3 schematically shows the known synchronization control block in the PSC controller implemented in the VCC structure,

Fig. 4 schematically shows a voltage source converter together with a controller implementing aspects of the present disclosure,

Fig, 5 schematically shows a first variation of an ac voltage control block of the controller to which ac voltage control block a synchronization angle determining branch is connected,

Fig 6 schematically shows a number of method steps in a method for determining a synchronizing angle for a processing plane,

Fig. 7 schematically shows a number of method steps in the control of the voltage source converter where the synchronization angle is used,

Fig. 8 schematically shows a second variation of an ac voltage control block to which a synchronization angle determining branch is connected,

Fig. 9 schematically shows one way in which the controller may be realized, and

Fig. 10 schematically shows a data carrier with computer program code, in the form of a CD-ROM disc, for implementing the functionality of the controller.

## DETAILED DESCRIPTION

Aspects of the present disclosure are related to the paper "A Universal Controller for Grid-Connected Voltage-Source Converters" by L. Harnefors et al., IEEE JOURNAL OF EMERGING AND SELECTED TOPICS IN POWER ELECTRONICS, VOL. 9, NO. 5, OCTOBER 2021. The contents of this paper are herein incorporated by reference.

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

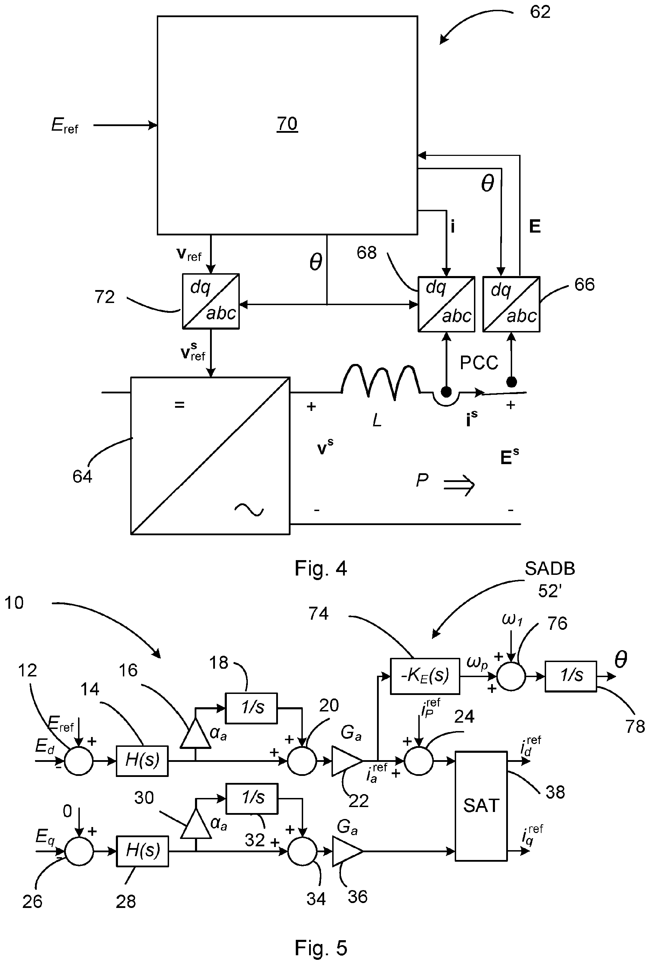

Fig. 4 shows an example of a converting arrangement 62 comprising a voltage source converter 64 and a controller 70 for the voltage source converter 64. The voltage source converter 64 has a direct current, dc, side and an alternating current, ac, side, where the voltage source converter provides an ac voltage $\mathbf{v}^s$ on the ac side. On the ac side the voltage source converter 64 is also connected to a point of common coupling PCC via an inductance L. At this point of common coupling PCC an ac current $\mathbf{i}^s$ and an ac voltage $\mathbf{E}^s$ are measured, which current and voltage are provided in a control plane. The voltage and current may be measured using measurement transformers. The measured ac voltage $\mathbf{E}^s$ is converted from the control-plane to the processing plane by a first plane converting unit 66 and the measured ac current $\mathbf{i}^s$ is converted from the control plane to the processing plane by a second plane converting unit 68. The processing plane current $\mathbf{i}$ and voltage $\mathbf{E}$ are then supplied to the controller 70. The controller 70 also receives a voltage reference $E_{\text{ref}}$ for the voltage at the point of common coupling PCC and supplies a reference voltage $\mathbf{v}_{\text{ref}}$ in the processing plane for the converter output voltage. The converter reference voltage $\mathbf{v}_{\text{ref}}$ is sent to a third plane converting unit 72 which converts the reference voltage from the processing plane to the control plane before being supplied to the voltage source converter 64 as $\mathbf{v}^s_{\text{ref}}$. The controller 70 also supplies the plane converting units 66, 68 and 72 with a synchronization angle $\theta$ to be used in the plane conversions.

The reference voltage $\mathbf{v}^s_{\text{ref}}$ is then used in a known way to control the ac side voltage $\mathbf{v}^s$ of the voltage source converter 64.

The processing plane is a plane in which processing of electrical ac quantities is performed, such as the quantities current and voltage. In the example described here, the processing plane is the dq-plane, where the first axis is the d-axis and the second axis is the q-axis. The control plane is in turn the plane in which the electrical quantities are detected and the control is being performed. This plane is in this case the abc-plane.

The plane converting units 66, 68 and 72 are here shown separate from the controller 70. It should however be realized that they may just as well be a part of the controller 70.

The controller 70 is a power synchronization controller mapped onto a vector current control structure. As was mentioned earlier, aspects of the present disclosure are concerned with limiting ringing in the output current of a voltage source converter. How this may be done will now be described in some more detail together with an analysis of the known controller shown in fig. 1, 2 and 3 and the previously described equations (1) - (4).

Ringing occurs for high current levels. This influence will now be quantified. The active output power P at the PCC is given by

$$P = \kappa Re\{\boldsymbol{Ei^*}\} \tag{5}$$

Linearization of (5) by introducing E = $E_{ref}$ + ΔE and i = $\mathbf{i_o}$ + Δi yields

$$P = \kappa \mathrm{Re}\{(E_{\mathrm{ref}} + \Delta\mathbf{E})(\mathbf{i_0} + \Delta\mathbf{i})^*\} \approx \kappa \mathrm{Re}\{E_{\mathrm{ref}}\mathbf{i_0^*} + \mathbf{i_0^*}\Delta\mathbf{E} + E_{\mathrm{ref}}\Delta\mathbf{i}\}$$
$$= \kappa Re\{E_{\mathrm{ref}}\mathbf{i} - \mathbf{i_0^*}(E_{\mathrm{ref}} - \mathbf{E})\} \tag{6}$$

In the paper it is shown that the closed-loop system which results from the control scheme in fig. 1 is given by

$$\mathbf{i} = G_c(s)i_P^{\mathrm{ref}} + Y_c(s)(E_{\mathrm{ref}} - \mathbf{E}) \tag{7}$$

where

$$G_c(s)\frac{\alpha_c}{s+\alpha_c} \qquad\qquad Y_c(s)\frac{s+\alpha_a}{s(sL+R_a)} \tag{8}$$

If (3) is followed, then

$$Y_c(s) = \frac{s+\alpha_a}{R_a s}H(s) \tag{9}$$

Substitution in (6) yields

$$P = \kappa E_{\mathrm{ref}}[G_c(s)i_P^{\mathrm{ref}} + Y_c(s)(E_{\mathrm{ref}} - E_d)] - \kappa Re\{i_0^*(E_{\mathrm{ref}} - \mathbf{E})\}$$
$$= G_c(s)P_{\mathrm{ref}} + \kappa E_{\mathrm{ref}}Y_c(s)(E_{\mathrm{ref}} - E_d) - \kappa Re\{i_0^*(E_{\mathrm{ref}} - \mathbf{E})\} \tag{10}$$

In turn, the power control error, which is the input to the synchronization angle controller, is given as

$$P_{\mathrm{ref}} - P = [1 - G_c(s)]P_{\mathrm{ref}} - \kappa E_{\mathrm{ref}}Y_c(s)(E_{\mathrm{ref}} - E_d) + \kappa Re\{i_0^*(E_{\mathrm{ref}} - \mathbf{E})\} \tag{11}$$

Here, the first term, $[1-G_c(s)]P_{\mathrm{ref}}$, determines the immediate response to a reference change. $G_c(s)$ has a high bandwidth. Therefore, the influence of the first term can normally be neglected. The second term is dominant and shows the influence of a deviation of $E_d$ from its reference. The third term is also a function of the voltage control error, but unlike the second term it is dependent on the current operating point. This term is the root cause of the ringing.
To eliminate the influence of $i_o$, the input $P_{\mathrm{ref}}$ - P to the power controller is not computed via (5), but using the linearized expression (11), where the first and third terms are dropped, giving

$$P_{\mathrm{ref}} - P = -\kappa E_{\mathrm{ref}}Y_c(s)(E_{\mathrm{ref}} - E_d) = \{(9)\} = \frac{\kappa E_{\mathrm{ref}}}{R_a}\frac{s+\alpha_a}{s}H(s)(E_{\mathrm{ref}} - E_d) \tag{12}$$

From Figure 1 we have that

$$i_a^{\text{ref}} = G_a \frac{s + \alpha_a}{s} H(s)(E_{\text{ref}} - E_d) \tag{13}$$

so it follows that (12) can be obtained by the following scaling of $i_a^{\text{ref}}$:

$$P_{\text{ref}} - P = -\frac{\kappa E_{\text{ref}}}{R_a G_a} i_a^{\text{ref}} \tag{14}$$

where the gain simplifies to $-\kappa E_{\text{ref}}$ for the PSC-corresponding selection $G_a = 1/R_a$. Finally, Fig. 3 yields

$$\omega_p = -\frac{\kappa E_{\text{ref}} K_p(s)}{R_a G_a} i_a^{\text{ref}} \tag{15}$$

where $\frac{\kappa E_{\text{ref}} K_p(s)}{R_a G_a}$ may be denoted $K_E(s)$.

The resulting scheme is illustrated in Fig. 5 where a voltage error $E_{\text{ref}}$ - $E_d$ is used for synchronization via the processed ac-voltage error $i_a^{\text{ref}}$.

As can be seen in fig. 5, there is an ac voltage control block 10 with the same realization as in fig. 1.

There is thus a control branch for the first axis, here realized as a d-axis control branch, which control branch comprises the first subtracting element 12 in which a voltage error at the PCC that is the difference between a voltage reference $E_{\text{ref}}$ and an ac voltage E along the d-axis of the dq-plane is calculated. The voltage error $E_{\text{ref}}$ - $E_d$ is supplied to the first low pass filter 14 that filters the ac voltage error using the transfer function $H(s)$. The low pass filtered voltage error is supplied to the first input of the first adding element 20 as well as to the first amplifying element 16 that amplifies the ac voltage error with the gain $\alpha_a$. The amplified and filtered ac voltage error is supplied to the first integrating element 18 that performs integration and supplies the result to the second input of the first adding element 20. The sum of the low pass filtered ac voltage error and the amplified and integrated low pass filtered ac voltage error is also here supplied to the second amplifying element 22, which multiplies the sum with a gain $G_a$ for obtaining the processed ac voltage error $i_a^{\text{ref}}$, which processed ac voltage error is supplied to the second adding element 24 to be added to the active-power-producing current reference $i_P^{\text{ref}}$. The sum of the processed ac voltage error $i_a^{\text{ref}}$ and the active-power-producing current reference $i_P^{\text{ref}}$ then supplied to the saturating element 38.

As in fig. 1, the ac voltage control block 10 also comprises a control branch for the second axis, here realized as a q-axis control branch. In the q-axis control branch the second subtracting element 26 subtracts the ac voltage $E_q$ of the PCC along the q-axis from zero and thereby provides a negative q-axis ac voltage $-E_q$ as an output. The negative q-axis ac voltage $-E_q$ is supplied to the second low pass filter 28 that filters the negative q-axis ac voltage $-E_q$ using the transfer function $H(s)$. The low-pass filtered negative q-axis ac voltage is supplied to the first input of the third adding element 34. The low pass filtered negative q-axis ac voltage is also supplied to the third amplifying element 30 that amplifies the ac voltage error with the gain $\alpha_a$. The amplified and filtered negative q-axis ac voltage is supplied to the second integrating element 32 that performs integration and supplies the result to the second input of the third adding element 34. The sum of the low pass filtered negative q-axis ac voltage and the amplified and integrated low pass filtered negative q-axis ac voltage is then supplied to the fourth amplifying element 36, which multiplies the sum with the gain $G_a$. The multiplied sum is then supplied to the saturating element 38, which in turn provides the d-axis current reference $i_d^{\text{ref}}$ and q-axis current reference $i_q^{\text{ref}}$ as output.

The first amplifying element 16, the first integrating element 18, the first adding element 20 and the second amplifying element 22 may here be considered to form a first proportional and integrating control entity having an output formed by the output of the second amplifying element 22, while the third amplifying element 30, the second integrating element 32, the third adding element 34 and the fourth amplifying element 36 may be considered to form a second proportional and integrating control entity having an output formed by the output of the fourth amplifying element 36.

As opposed to the converter depicted in fig. 1 - 31, the synchronization angle determining branch SADB 52' is not provided in a separate control block that operates on the power error. Instead, it is connected to the d-axis control branch of the ac voltage control block 10. It is more particularly connected to the output of the second amplifying element 22. Thereby the input of the synchronization angle determining branch 52' is also connected to the output of the first proportional and integrating control entity. The branch 52' comprises a processing element 74 in which the processed ac voltage error $i_a^{\text{ref}}$ output by the second amplifying element 22 is low pass filtered and amplified with a filter (gain) $-K_E(s)$ in order to obtain the angular frequency $\omega_p$. The angular frequency $\omega_p$ is supplied to a combining element in the form of a sixth adding element 76 in which the angular frequency is combined with a nominal angular frequency $\omega_1$ at the ac side of the voltage source converter. If the voltage source converter is connected to an ac grid, the nominal angular frequency $\omega_1$ may be the nominal angular frequency of the ac grid. The combining may additionally comprise the forming of a sum of the two angular frequencies. The combined angular frequencies, or the sum, is then integrated in a fourth integrating element 78 and provided as the synchronization angle $\theta$ for the dq-plane.

It can also be seen that instead of operating on a power error between the power P at the point of common coupling PCC and a power reference $P_{\text{ref}}$, the synchronization angle determining branch 52' operates on an amplified sum forming the processed ac voltage error $i_a^{\text{ref}}$, which sum is the sum of the low pass filtered ac voltage error $E_{\text{ref}} - E_d$ and the amplified and integrated low pass filtered ac voltage error $E_{\text{ref}} - E_d$.

The controller 70 also comprises a current control block that operates on a current error formed through a difference between the ac current at the point of common coupling PCC and the current reference. This current control block may have the realization shown in fig. 2.

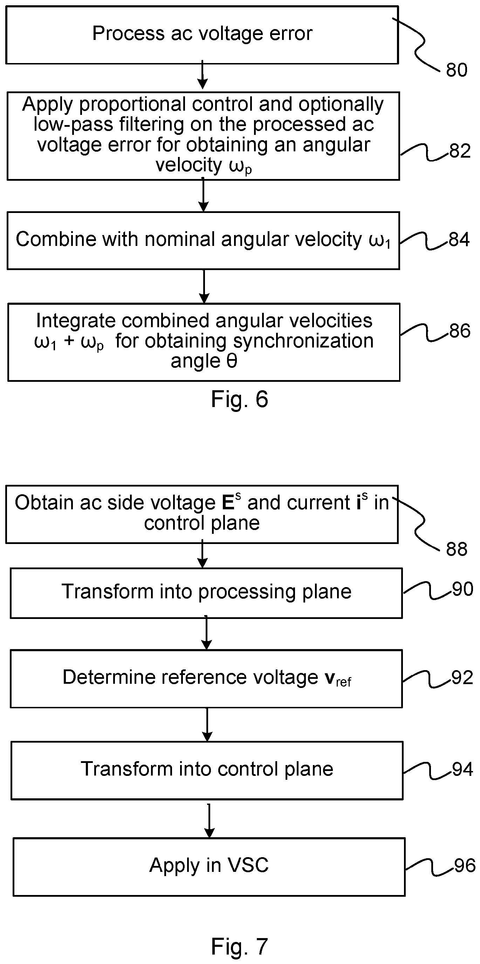

The operation of the controller 70 and then especially of the synchronization angle determining branch 52' may then be the following, as depicted in the flow chart of fig. 6.

The method may involve processing, in the d-axis control branch of the ac voltage control block 10, an ac voltage error $E_{\text{ref}} - E_d$ at the ac side of the voltage source converter, step 80, which maybe at the point of common coupling PCC and which processing may involve low pass filtering the ac voltage error $E_{\text{ref}} - E_d$ and performing proportional and integrating control on the possibly low-pass filtered ac voltage error to thereby obtain a processed ac voltage error

$i_a^{\text{ref}}$, which processed ac voltage error may be an ac-voltage-controlling current reference and where the ac voltage error $E_{\text{ref}} - E_d$ may be an ac voltage error related to a voltage $E_d$ along the d-axis of the dq-plane.

Thereafter, the method comprises processing the processed ac voltage error, in the synchronization angle determining branch 52'. According to aspects of the present disclosure the processing more particularly comprises applying proportional control $K_E$ on the processed ac voltage error for obtaining an angular velocity $\omega_\rho$, step 82. Here it is possible that the processing also comprises low pass filtering of the processed ac voltage error.

From the discussion made in relation to equation (15) it can be seen that the proportional control applied on the processed ac voltage error involves amplifying the processed ac voltage error with the gain $K_E$, which gain $K_E$ may be a modification of the gain Kp used to amplify the power error in the power control block formed by the previously mentioned synchronization control block, which power control block emulates a swing equation of a synchronous machine.

The gain $K_E$ used in the proportional control of the processed ac voltage error is in the present case based on the voltage reference $E_{\text{ref}}$ used for forming the ac voltage error. The gain $K_E$ used in the proportional control of the processed ac voltage error is here also be based on the gain $G_\alpha$ used when applying proportional and integrating control on the ac voltage error. The gain $K_E$ used in the proportional control of the processed ac voltage error is here furthermore based on the proportional gain $R_\alpha$ used in the proportional control of the current error. Finally, the gain $K_E$ used in the proportional control of the processed ac voltage error is in the present example also based on a space vector scaling constant $\kappa$. The gain $K_E$ used in the proportional control of the processed ac voltage error is in the present example additionally set as $K_E = \dfrac{\kappa E_{\text{ref}} K_p}{R_a G_a}$.

The processing may additionally comprise combining, in the synchronization angle determining branch 52', the obtained angular velocity $\omega_p$ with the nominal angular velocity $\omega 1$, step 84. The combining may in this case be the forming of a sum of the nominal angular velocity $\omega_1$ and the determined angular velocity $\omega_p$. It is more particularly possible that the synchronization angle $\theta$ is determined as the integrated combined angular velocities. This may be done through integrating the sum $\omega_1 + \omega_p$ in order to obtain the synchronization angle $\theta$, step 86.

The method may furthermore comprise determining, in the ac voltage control block 10, a component of a current reference along the first axis, a d-axis component, based on the processed ac voltage error $i_a^{\mathrm{ref}}$. The d-axis component $i_d^{\mathrm{ref}}$ of the current reference may more particularly be determined as a sum of the processed ac voltage error $i_a^{\mathrm{ref}}$ and the active-power-producing current reference $i_P^{\mathrm{ref}}$. The determined d-axis component $i_d^{\mathrm{ref}}$ the current reference is then supplied to the current control block.

The method may also comprise determining, in the ac voltage control block 10, a q-axis current component $i_q^{\mathrm{ref}}$ of the current reference based on a processed negative ac side voltage along the q-axis, which processing may comprise low pass filtering the negative ac voltage $-E_q$ along the q-axis and performing proportional and integrating control on the possibly low-pass filtered negative q-axis ac voltage $-E_q$, in order to obtain the q-axis component of the current reference. The method may further comprise supplying the q-axis component $i_a^{\mathrm{ref}}$ of the current reference to the current control block.

It is furthermore possible that the current reference is saturated before being supplied to the current control block. This may involve limiting the magnitude of the current reference to a maximum allowed value, while retaining the phase angle. The angle between the d- and q-components is thus retained while the vector length is reduced.

The method may additionally comprise providing, in the current control block, a current error made up of a difference between the current reference $\mathbf{i}_{\mathrm{ref}}$ and the ac side current $\mathbf{i}$ and processing the current error for obtaining the voltage reference for the voltage source converter, where the current reference is made up of the d-axis component of the current reference and the q-axis component of the current reference. The processing may furthermore comprise performing proportional control of the current error through amplifying it with a gain and combing the amplified current error with the amplified current and the ac side voltage, possibly after being low pass filtered, where the result of the combination is a voltage reference $\mathbf{v}_{\mathrm{ref}}$ for the voltage source converter in the dq-plane. The combination may here be a sum of the amplified current error, the amplified current and the ac side voltage.

The synchronization angle is typically used in the control of the voltage source converter. It is more particularly used in transformations between the abc- and dq-planes. Therefore, the method may additionally comprise, as is shown in the flow chart of fig. 7, obtaining the ac voltage $\mathbf{E^s}$ and the ac current $\mathbf{i^s}$ at the ac side of the voltage source converter 64, step 88, where the ac side voltage and current are obtained in the control plane, transforming the obtained ac side voltage and current from the control plane into the processing plane using the determined synchronization angle $\theta$, step 90, determining the reference voltage $\mathbf{v}_{\mathrm{ref}}$ in the processing plane based on the transformed voltage and current $\mathbf{E}$ and $\mathbf{i}$, step 92, transforming the reference voltage from the processing plane to the control plane using the synchronization angle $\theta$, step 94, and applying the transformed reference voltage $\mathbf{v}_{\mathrm{ref}}$ in the voltage source converter, step 96.

Through determining the synchronization angle in the above-mentioned way, ringing at high current levels is avoided or mitigated. Also power overshoot may be avoided or mitigated. Furthermore, it can be seen that processing is simplified as there is no need for measuring the power or operating on the power error.

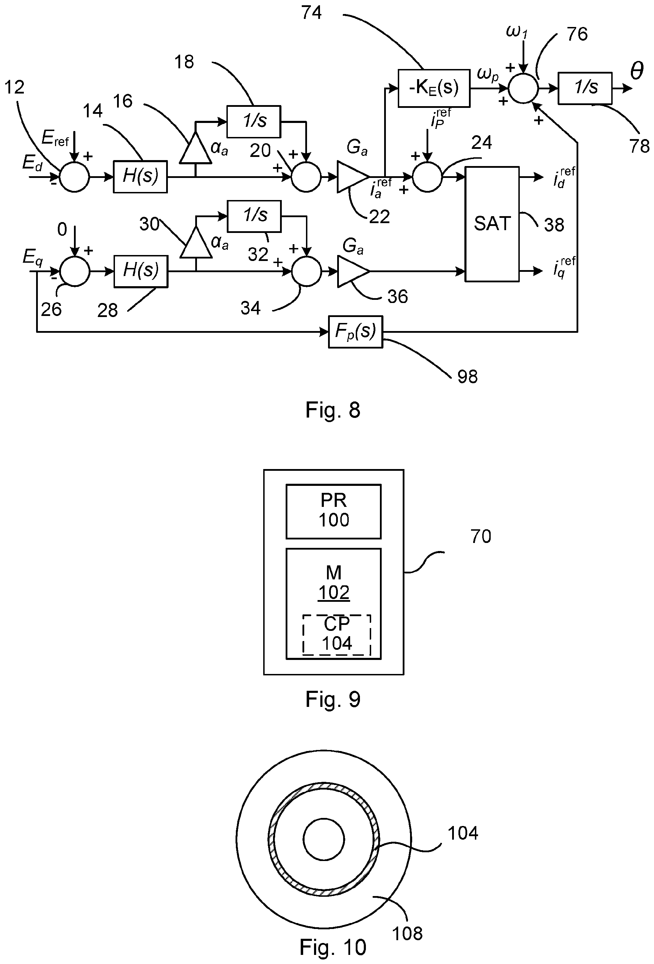

Fig. 8 schematically shows an alternative realization of the combination of an ac voltage control block and a synchronization angle determining branch. This realization is in many aspects similar to the realization shown in fig. 5. However, as opposed to the realization in fig. 5, it comprises a PLL processing element 98 that applies a PLL (phase locked loop) function $F_p(s)$ on the q-axis ac voltage $E_q$. The PLL function may involve low pass filtering the q-axis ac voltage $E_q$ with a low pass filter gain $F_p(s)$. After this processing, the processed q-axis ac voltage is supplied to a third input terminal of the sixth adding element 76, where it is combined with the angular frequencies $\omega_p$ and $\omega_1$.

As can be seen in fig. 9, the controller 70 may be realized as a processor PR 100 and a memory M 102 comprising a computer program CP 104 that implements the controller functionality. The computer program 104 may thereby have computer program code, software code or computer instructions implementing the controller functionality. The processor 100 thereby implements the controller functionality when running the computer program 104.

It should be realized that the processor may be a central processing unit (CPU), multiprocessor, a digital signal processor (DSP) or the processor of an application specific integrated circuit (ASIC), field programmable gate array (FPGA) etc., capable of implementing the controller functionality. The memory 102 may for example be a random access memory (RAM), a read-only memory (ROM), an erasable programmable read-only memory (EPROM), or an electrically erasable programmable read-only memory (EEPROM).

The computer program may also be realized as a computer program product comprising a data carrier with the computer program. One such data carrier 108 or non-volatile storage medium, in the form of CD Rom disk comprising the computer program 104 is schematically shown in fig. 10. It should be understood that the data carrier is not limited to CD ROM disks, but may as an example be realized as a USB (Universal Serial Bus) memory or a Flash memory instead.

The inventive concept has mainly been described above with reference to a few examples. However, as is readily appreciated by a person skilled in the art, other embodiments than the ones disclosed above are equally possible within the scope of the inventive concept, as defined by the appended claims.

The processing plane was exemplified by the dq-plane. It should however be realized that the processing may be carried out in another plane, such as for instance the $\alpha\beta$-plane. It should also be realized that one or more of the low pass filters may be omitted. It is also possible that the provision of a current reference is made without saturation.

**Claims**

1. A method of determining a synchronizing angle for a processing plane comprising a first axis and a second axis, the method being performed in a controller (70) that controls a voltage source converter (64) having an alternating current, ac, side and a direct current, dc, side, the method comprising:

   processing (80) an ac voltage error ($E_d$ - $E_{ref}$), which ac voltage error ($E_d$ - $E_{ref}$) is the error of a voltage component ($E_d$) along the first axis of an ac voltage (E) at the ac side of the voltage source converter (64), to thereby obtain a processed ac voltage error $\left(i_a^{\mathrm{ref}}\right)$, and
   determining (82, 84, 86) the synchronization angle ($\theta$) for the processing plane based on the processed ac voltage error $\left(i_a^{\mathrm{ref}}\right)$.

2. The method as claimed in claim 1, wherein the determining of the synchronization angle ($\theta$) comprises applying (82) proportional control ($K_E$) on the processed ac voltage error $\left(i_a^{\mathrm{ref}}\right)$ for obtaining an angular velocity ($\omega_p$).

3. The method as claimed in claim 2, wherein the proportional control is combined with low pass filtering.

4. The method as claimed in claim 2 or 3, wherein the determining of the synchronization angle ($\theta$) comprises combining (84) the obtained angular velocity ($\omega_p$) with a nominal angular velocity ($\omega_1$).

5. The method as claimed in claim 4, wherein the determining of the synchronization angle ($\theta$) comprises integrating (86) the angular velocity combination ($\omega_1 + \omega_p$) in order to obtain the synchronization angle ($\theta$).

6. The method according to any previous claim, further comprising obtaining (88) the ac voltage ($E^s$) at the ac side of the voltage source converter (64), determining (92) a reference voltage ($\mathbf{v}_{ref}$) for the voltage source converter (64), where the ac side voltage is obtained in a control plane and the reference voltage is determined in the processing plane, transforming (90) the ac side voltage from the control plane to the processing plane using the synchronization angle ($\theta$) and transforming (94) the reference voltage from the processing plane to the control plane using the synchronization angle ($\theta$).

7. The method as claimed in any previous claim, wherein the processing of the ac voltage error ($E_d$ - $E_{ref}$) comprises applying proportional and integrating control on the ac voltage error for obtaining the processed ac voltage error $\left(i_a^{\mathrm{ref}}\right)$.

8. The method as claimed in claim 7, further comprising determining a current reference based on the processed ac voltage error $\left(i_a^{\mathrm{ref}}\right)$.

9. The method as claimed in claim 8, wherein the determining of the current reference comprises determining a component of the first axis of the current reference based on the processed ac voltage error.

10. The method as claimed in claim 8 or 9 when depending on claim 6, further comprising processing the current reference for obtaining the control voltage used to control the voltage source converter (64).

11. A controller (70) for controlling a voltage source converter (64) having an alternating current, ac, side and a direct current, dc, side, the controller (70) being configured to:

process an ac voltage error ($E_d$ - $E_{ref}$), which ac voltage error ($E_d$ - $E_{ref}$) is the error of a voltage component ($E_d$) along a first axis of an ac voltage (E) at the ac side of the voltage source converter (64), where the first axis is an axis of a processing-plane also comprising a second axis and

determine a synchronization angle ($\theta$) for the processing plane based on the processed ac voltage error $\left( i_a^{ref} \right)$.

12. The controller (70) according to claim 11, wherein the controller is a power synchronization controller that is mapped onto a vector current control structure,

13. A converting arrangement (62) comprising a voltage source converter (64) and a controller (70) according to claim 11 or 12.

14. A computer program (104) for determining a synchronizing angle for a processing plane comprising a first axis and a second axis, which synchronization angle is used by a controller (70) comprising a processor (100) and configured to control a voltage source converter (64), the computer program (104)) being configured to implement the operation according to any of claims 1-10 when being operated on by the processor (100) of the controller (70) according to claim 11.

15. A computer program product for determining a synchronizing angle for a processing plane comprising a first axis and a second axis, the computer program product comprising a data carrier (108) with the computer program (104) according to claim 14.

Fig. 1

Fig. 2

Fig. 3

Fig. 4

Fig. 5

```
┌─────────────────────────────────────┐
│        Process ac voltage error      │ ──── 80
└─────────────────────────────────────┘
                   │
                   ▼
┌─────────────────────────────────────┐
│  Apply proportional control and      │
│  optionally low-pass filtering on    │
│  the processed ac voltage error for  │ ──── 82
│  obtaining an angular velocity $\omega_p$ │
└─────────────────────────────────────┘
                   │
                   ▼
┌─────────────────────────────────────┐
│ Combine with nominal angular velocity $\omega_1$ │ ──── 84
└─────────────────────────────────────┘
                   │
                   ▼
┌─────────────────────────────────────┐
│ Integrate combined angular velocities│
│ $\omega_1 + \omega_p$ for obtaining synchronization │ ──── 86
│ angle $\theta$                       │
└─────────────────────────────────────┘
```

Fig. 6

```
┌─────────────────────────────────────┐
│ Obtain ac side voltage $\mathbf{E}^s$ and current $\mathbf{i}^s$ in │
│ control plane                        │ ──── 88
└─────────────────────────────────────┘
                   │
                   ▼
┌─────────────────────────────────────┐
│     Transform into processing plane  │ ──── 90
└─────────────────────────────────────┘
                   │
                   ▼
┌─────────────────────────────────────┐
│   Determine reference voltage $\mathbf{v}_{ref}$ │ ──── 92
└─────────────────────────────────────┘
                   │
                   ▼
┌─────────────────────────────────────┐
│      Transform into control plane    │ ──── 94
└─────────────────────────────────────┘
                   │
                   ▼
┌─────────────────────────────────────┐
│             Apply in VSC             │ ──── 96
└─────────────────────────────────────┘
```

Fig. 7

Fig. 8

Fig. 9

Fig. 10

Europäisches
Patentamt

European
Patent Office

Office européen
des brevets

# EUROPEAN SEARCH REPORT

Application Number

**EP 22 16 4840**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BART MEERSMAN ET AL: "Overview of PLL methods for distributed generation units", UNIVERSITIES POWER ENGINEERING CONFERENCE (UPEC), 2010 45TH INTERNATIONAL, IEEE, PISCATAWAY, NJ, USA, 31 August 2010 (2010-08-31), pages 1-6, XP031811811, ISBN: 978-1-4244-7667-1 * page 1 - page 3; figures 1, 2,4 * * abstract * | 1-15 | INV. H02M7/5387 |
| A | HARNEFORS LENNART ET AL: "Generic PLL-Based Grid-Forming Control", IEEE TRANSACTIONS ON POWER ELECTRONICS, INSTITUTE OF ELECTRICAL AND ELECTRONICS ENGINEERS, USA, vol. 37, no. 2, 19 August 2021 (2021-08-19), pages 1201-1204, XP011883404, ISSN: 0885-8993, DOI: 10.1109/TPEL.2021.3106045 [retrieved on 2021-10-14] * page 1202; figures 1, 3 * | 6,8-10, 12,14,15 | |

TECHNICAL FIELDS
SEARCHED (IPC)

H02M

The present search report has been drawn up for all claims

| Place of search | Date of completion of the search | Examiner |
|---|---|---|
| The Hague | 21 September 2022 | Zeljkovic, Sandra |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **L. HARNEFORS et al.** A Universal Controller for Grid-Connected Voltage-Source Converters. *IEEE JOURNAL OF EMERGING AND SELECTED TOPICS IN POWER ELECTRONICS,* October 2021, vol. 9 (5